# EUROPEAN PATENT SPECIFICATION

(11) **EP 2 246 296 B1**
(45) Date of publication and mention of the grant of the patent: **09.11.2016**
(21) Application number: 08868239.8
(22) Date of filing: 19.12.2008
(51) Int. Cl.: C01B 21/083, C01B 7/24

(54) **PROCESS AND APPARATUS FOR PRODUCING FLUORINATED GASEOUS COMPOUND**
VERFAHREN UND VORRICHTUNG ZUR HERSTELLUNG EINER FLUORIERTEN GASFÖRMIGEN VERBINDUNG
PROCÉDÉ ET APPAREIL POUR PRODUIRE UN COMPOSÉ GAZEUX FLUORÉ

(30) Priority: 27.12.2007 JP 2007337326
(43) Date of publication of application: 03.11.2010
(73) Proprietor: Central Glass Co., Ltd., Ube-shi, Yamaguchi 755-0001 (JP)
(72) Inventor: TANAKA, Hisao, Ube-shi Yamaguchi 755-0001 (JP); MORI, Isamu, Ube-shi Yamaguchi 755-0001 (JP); TANAKA, Kenji, Ube-shi Yamaguchi 755-0001 (JP)
(74) Representative: Gulde & Partner
(86) International application number: PCT/JP2008/073178
(87) International publication number: WO 2009/084475

(56) References cited:
- EP-A1- 1 215 169
- EP-A2- 1 433 748
- JP-A- 2000 044 212
- JP-A- 2002 201 011
- JP-A- 2003 238 122
- JP-A- 2004 203 739
- JP-A- 2007 099 600
- US-A1- 2004 191 156

## Description

### TECHNICAL FIELD

Fluorinated gas compounds such as NF₃, IF₅, IF₇, ClF₃, WF₆ and the like are typically used as a detergent to clean inside of semiconductor fabricating apparatuses such as CVD and PVD apparatuses. A variety of methods for effective production of such gas compounds still have been of great concern in the industry. The above-mentioned gas compounds of NF₃, IF₅, IF₇, ClF₃, and WF₆ are all reaction-completed fluorides to which reference is made by example in the present invention.

### BACKGROUND ART

The applicants of the present invention disclose, for instance, a method of reacting liquidized ammonium complexes with gaseous interhalogenated substances such as ClF₃ to compose gaseous nitride halides as represented by a composition formula of NFₓL₃₋ₓ (L may be any of halides other than F, satisfying 1 ≤ *x ≤*3) (e.g., see Patent Document 1 listed below). The nitride halides are fluorinated during the succeeding treatment(s) and converted to NF₃. Such gaseous fluorinated compounds are preferably generated in successive generation procedures for their respective efficient productions. The term 'successive' used herein expresses feeding raw materials without intermittence while a devised system is working, so as to cause a reaction(s) as desired and produce functional gases. The fluorinated compounds are typically generated by a reaction(s) of a gas stock with a non-gas raw material(s). For example, Patent Document 1 teaches the reaction of a liquid stock L with a gaseous material.

In order to efficiently conduct successive productions in the aforementioned conditions, the liquid stock L must be continuously supplied to a reaction chamber where the liquid stock L is to react with the gaseous material. A method of continuously supplying the liquid stock L to the reaction chamber is disclosed in which the principle of bubble column reactors is applied in circulating liquid ammonium acid fluoride in a basin (e.g., see Patent Document 2 listed below). In Patent Document 2, the liquid ammonium acid fluoride reacts with gaseous fluoride to produce NF₃. A circulation of the liquid ammonium acid fluoride, namely, a flow of the liquid is resulted from directing into the basin bubble jet of HF that would not be involved with the reaction series.

In some prior art technology, disclosed is a process where part of gases resulted from a reaction is fed back to a reaction chamber and then reused as a fluid source of a reactant substance to circulate, and in such a process, a retainable biological catalyst is used to convert some components in liquid waste into solid products that easily disgregate from the remaining, so as to facilitate a biological treatment of the liquid waste. The process comprises the steps of:
(a) feeding liquid waste to one or more inlets/nozzles to direct a flow of the liquid waste, one or more outlets/nozzles to drain refined water out, one or more draft tubes, one ore more inlets/nozzles located inside the draft tubes to sparge gas and/or air and bubble them up in the draft tubes, and a reaction vessel having a bed deposited with microbe-coated particles,
(b) keeping the liquid waste infiltrated into the bed of microbe-coated particles to convert some components in the liquid waste into solids,
(c) aerating the liquid in the draft tubes by means of the gas and/or air sparged through the nozzles to direct the liquid upward in the draft tubes,
(d) unsticking the self-floating solid products from the bed of microbe-coated particles and evacuating the reaction vessel of the liquid thus treated so far, continually if desired, and
(e) eliminating the solid of the particles from the bottom of the reaction vessel, continually if desired (e.g., see Patent Document 3 listed below).

As another prior art technology embodiment where part of gases resulted from a reaction is fed back to a reaction chamber and reused as a fluid source of a reactant to circulate, disclosed is a liquid waste treatment apparatus that has a reaction basin and septa vertically extended from the upper middle of an inner wall of the reaction basin with an orifice conducting with the basin so as to separate a reaction cell inside the septa from the outside to which depositions are to drop through the orifice. The apparatus also has air-lifting partitions extended in the reaction basin where a carrier-suspending liquid is aerated by air sparged into the bottom of the partitions so as to force suspended carriers to flow upward and cause microorganisms attached to the surface of the carriers to biodegrade liquid waste supplied to the reaction basin. The air-lifting partitions have their respective upper portion provided with a movable shield which is moved up and down to adjust a level of its upper edge so as to control turbulence flows of the liquid, thereby facilitating biological coating over the suspended carriers (see Patent Document 4 listed below).

Patent Document 1 WO2007/04409
Patent Document 2 Japanese Preliminary Publication of Unexamined Patent Application No. 2003-238122
Patent Document 3 Japanese Preliminary Publication of Unexamined Patent Application No. 2004-526561
Patent Document 4 Japanese Preliminary Publication of Unexamined Patent Application No. H02-135195

Furthermore, from EP 1 433 748 A2, US 2004/181156 A1 and EP 1 215 169 A1 apparatus of generating fluorinated gas compounds are known.

### DISCLOSURE OF THE INVENTION

### PROBLEMS TO BE SOLVED BY THE INVENTION

In a method of generating nitride trifluorides disclosed in Patent Document 2, coolers such as a coiled pipe cooler are located on an outer wall of the reactor so that heat of reaction almost equivalent to heat of HF vaporization is dissipated by an HF recovery device. Also, in this method described in Patent Document 2, a sink to which fluids are supplied, namely, a reactor 20 is shaped non-linear but just like an urn unlike the present invention, and hence, the reactor 20 must be increased in capacity as is required to scale gas production up. The reactor 20 of the greater capacity cannot keep the liquids therein at a uniform predetermined temperature, and the costs of equipment and manufacturing are accordingly increased to cope with it. It is necessary to keep a reaction system at 100 degrees Celsius or higher to vaporize HF in an environment where ammonium acid fluoride exists, and the above-mentioned disadvantage with the reactor of the increased capacity becomes innegligibly elicited.

A reaction container 1 used in applying a process disclosed in Patent Document 3 to the method of generating fluorinated gas compounds is also shaped non-linear just like an urn. Thus, the reaction container 1 must be greater in capacity in an attempt to scale the gas production up, resulting the similar disadvantages to those of the embodiment in Patent Document 2.

In the event of applying a process disclosed in Patent Document 4 to the method of generating fluorinated gas compounds, a reaction basin 22 in Patent Document 4 is shaped non-linear just like an urn unlike the present invention, and the attempt to scale up the gas production necessitates increase in the capacity of the reaction basin 22, leading to the similar disadvantages to those of the embodiment in Patent Document 2.

### <OBJECT OF THE INVENTION>

The present invention, namely, a method of generating fluorinated gas compounds and an apparatus for the same, is made to overcome the aforementioned disadvantages in the prior art method of generating nitrogen trifluorides and another prior art method of feeding part of gases resulted from a reaction back to a reaction chamber and reusing it as a fluid source of a reactant substance to succeedingly circulate, and accordingly, it is an object of the present invention to provide a method and apparatus of generating fluorinated gas compounds that is simple in structure and reduced in risk of malfunctions, and allows for more efficient chemical reactions.

### MEANS TO SOLVE THE PROBLEMS

The present invention refers to a method of generating fluorinated gas compounds by means of reacting liquid stock with gaseous material as claimed in claim 2 using an apparatus as claimed in claim 1.

The apparatus of generating fluorinated gas compounds by means of reacting liquid stock with gaseous material according claim 1 comprises
- a vertical cyclindrical column reactor,
- a separating basin having its bottom conductively coupled to the top of the column reactor and
- a return column cooler conductively coupled to the bottom of the separating basin and expending downward therefrom;
wherein the separating basin is hollow and columnar in shape, its inner wall is covered with thin film of polytetrafluorethylene, further it is circular in horizontal cross-section and has a measured quantity dispensing tap in its lower side; at the top of the separating basin a level gauge orifice is centered and a thermometer orifice and four gas outlets are all concentrically arranged in the middle of radius segments of the circular top; and wherein the return column cooler has a coolant supply port at its lower side and a coolant drawing port at it upper side as well as a plurality of reaction channels in parallel one another within a hollow cylindrical cooling housing; further the lower portion of the return column cooler is buckled in right-angled L shape to lie horizontal and then further bent up at right angle so as to lead to the bottom of the column reactor; the horizontal extension of the return column cooler between both the right-angled bends is provided with a thermometer residing horizontally; an upright end from the right-angled bend ahead from the horizontal extension in the return column cooler at the bottom a reactant filling/refilling port is conducted vertically upward; further in its part in the vicinity of the column reactor a gaseous material sparging port is provided having a reactant gas nozzle with a plurality of nozzle apertures that are beveled downward in the vicinity of the distal end, wherein the reactant gas nozzle is attached so that the nozzle apertures are almost centered in a horizontal dimension of a lumen of the return column cooler.

The method according to claim 2 of generating fluorinated gas compounds by means of reacting liquid stock with gaseous material using an apparatus as circulating system as described above is characterized by the following:
- a fluid including NH₄F-nHF as virgin liquid stock L circulates through the column reactor, the separating basin, and the return column cooler successively,
- the return column cooler is refilled through the reactant filling port with the reaction/recycled liquids that are drawn through the measured quantity dispensing tap and regulated in quantity as much as that of the virgin stock L,
- a reactant gaseous material ClF₃ and the reaction gas products NF₂Cl, NFCl₂ and NF₃ are sparged through the sparging port into a liquid mixture containing the reaction/recycled liquids drawn through the measured quantity dispensing tap, the virgin stock L and the reacted liquid stock L in the return column, wherein
   - the reactant gaseous material ClF₃ is a virgin gas newly applied to undergo the reaction for the first time,
   - the reaction gas products NF₂Cl and NFCl₂ are drawn from the gas outlets at the top of the separting basin, and
   - NF₃ is derived from the second or later cycle fluorinating reaction where the reaction gas products NF₂Cl and NFCl₂ obtained through the gas outlet are further fluorinated.

### EFFECTS OF THE INVENTION

The method and apparatus of generating fluorinated gas compounds in accordance with the present invention is simple in architecture and reduced in risk of malfunctions, and efficiently facilitates a fluorinating reaction.

### BEST MODE OF IMPLEMENTING THE INVENTION

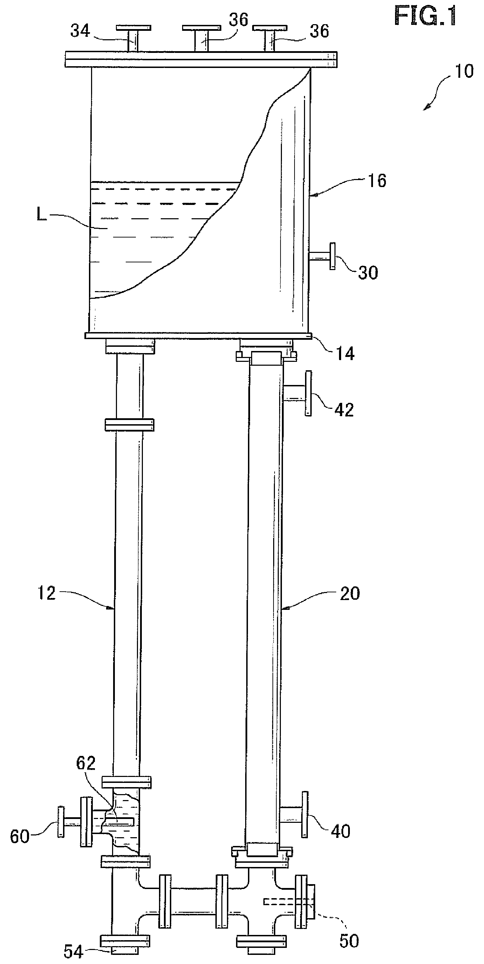

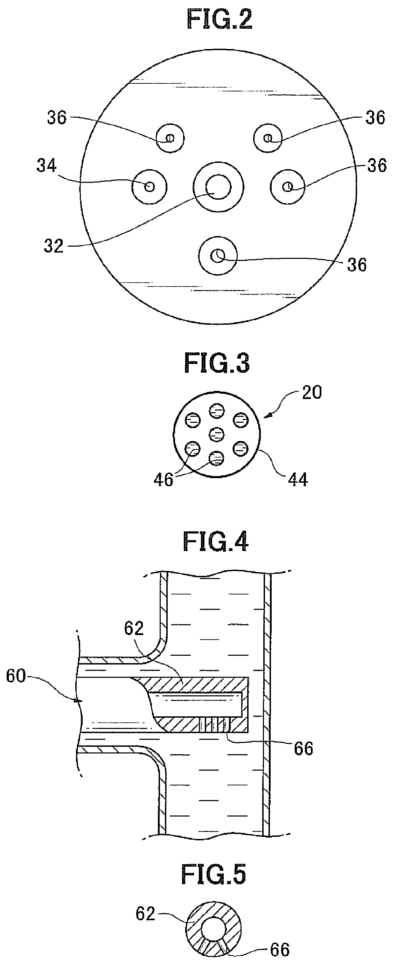

The apparatus for generating fluorinated gas compounds according to the present invention will now be described in conjunction with the accompanying drawings. Fig. 1 is a side view of the first embodiment of the fluorinated gas compound generating apparatus 10. Fig. 2 is a plan view of the fluorinated gas compound generating apparatus 10. Fig. 3 is a horizontal sectional view showing a return column cooler. Fig. 4 is a sectional view of an enlarged part of a sparging port of a reactant or a gaseous material in Fig. 1. Fig. 5 is a vertical sectional view of a nozzle of the reactant or the gaseous material.

### <Configuration of the Apparatus>

The apparatus 10 for generating fluorinated gas compounds is, as shown in Fig. 1, comprised of a vertical cylindrical column reactor 12, a separating basin 16 having its bottom conductively coupled to the top of the column reactor 12 to disgregate liquid from gas, and a return column cooler 20 conductively coupled to the bottom of the separating basin 16 and extending downward therefrom. Fluids including NH₄F-nHF circulate through the column reactor 12, the separating basin 16, and the return column cooler 20 successively.

The separating basin 16, which has its bottom 14 conductively coupled to the top of the column reactor 12 to disgregate the liquid from the gas, is hollow and columnar in shape and has its inner wall covered with thin film of polytetrafluoroethylene.

The separating basin 16, which also is circular in horizontal cross-section, has its bottom 14 conductively coupled to the column reactor 12 as well as to the return column cooler 20. The separating basin 16 has a measured quantity dispensing tap 30 provided in its lower side to regulate and feed a flow of the reaction/recycled liquids. For the purpose of pressure reduction within the separating basin 16, an orifice 32 may be provided with a vacuum pump (not shown). At the top of the separating basin 16, as can be seen in Fig. 2, the level gauge orifice 32 (a level gauge is not shown) is centered while a thermometer orifice 34 (a thermometer is not shown) and four gas outlets 36 are all concentrically arranged in the middle of radius segments of the circular top.

The return column cooler 20 is, as shown in Fig. 1, provided with a coolant supply port 40 at its lower side through which coolant composed of any of chlorofluorocarbons is supplied and a coolant drawing port 42 at it upper side through which the coolant of the chlorofluorocarbon is evacuated from the column. The return column cooler 20 is, as shown in a horizontal cross-sectional view of Fig. 3, provided with a plurality of reaction channels 46 in parallel with one another within a hollow cylindrical cooling housing 44 so as to lead the reaction/recycled liquids downward. A flow of coolant, filling clearances among the cooling housing 44 and the reaction channels 46, goes up.

The return column cooler 20 has its lower portion buckled in right-angled L shape to lie horizontal and then further bent up at right angle so as to lead to the bottom of the column reactor 12. The horizontal extension of the return column cooler 20 at the bottom between both the right-angled bends is provided with a thermometer 50 that resides horizontally to determine temperature of the reaction/recycled liquids. An upright end from the right-angled bend ahead of the horizontal extension in the return column cooler 20 at the bottom has a reactant filling/refilling port 54 that is conducting vertically upward to refill the return column cooler 20 with the reaction/recycled liquids that are drawn through the measured quantity dispensing tap 30 and regulated in quantity as much as that of the virgin liquid stock L. The virgin liquid stock L may be fed from the return column cooler 20.

The return column cooler 20 has its part in the vicinity of the column reactor 12 provided with a gaseous material sparging port 60 through which supplied are a reactant gaseous material ClF₃, reaction gas products NF₂Cl and NFCl₂ derived from the reaction chamber, and another reaction gas product NF₃ resulted from further fluorinating the reaction gas products. The reactant gaseous material ClF₃ is a virgin gas newly applied to undergo the reaction for the first time; the reaction gas products NF₂Cl and NFCl₂ are drawn from the gas outlets 36 at the top of the separating basin 16; and NF₃ is derived from the second- or later cycle fluorinating reaction where the reaction gas products NF₂Cl and NFCL₂ obtained through the gas outlet 36 are further fluorinated. Fluorinating agents used to fluorinate NF₂Cl and NFCL₂ include fluorine gases such as F₂, ClF₃, and the like, metal fluorides such as CoF₃, and composite metal fluorides such as K₃NiF₇. Alternative to fluorinating NF₂Cl and NFCL₂, they may undergo thermal decomposition to generate NF₃.

As depicted in Figs. 4 and 5, a reactant gas nozzle 62, which is used to sparge the reactant gaseous materials ClF₃, NF₂Cl, NFCL₂ and NF₃ into the return column cooler 20, is generally hollow and closed only at its distal end, and is provided with a plurality of nozzle apertures 66 that are beveled downward in the vicinity of the distal end. The reactant gas nozzle 62 is attached so that the nozzle apertures 66 are almost centered in a horizontal dimension of a lumen of the return column cooler 20.

### <Operation of the Apparatus>

The above-mentioned fluorinated gas compound generating apparatus 10 is operated in the following manner as detailed below. In the return column cooler 20, the gaseous material (the reactant gas) ClF₃ and the reaction gas products such as NF₂Cl, NFCL₂, NF₃ and the like are sparged into a liquid mixture containing one or more of the reaction/recycled liquids drawn through the measured quantity dispensing tap 30 and regulated in quantity as much as that of the virgin liquid stock L, the virgin liquid stock L (NH₄F-nHF), and the reacted liquid stock L cooled in the return column cooler 20. As a consequence, the liquids in the column reactor (i.e., a reaction chamber) gets smaller in apparent relative density and lighter, goes up through the column reactor 12 (i.e., the reaction chamber) while reacting with the gases till it eventually enters the separating basin 16.

A quantity of the reaction liquids, namely, a level of the liquids remaining in the separating basin 16 after the reaction is regulated by appropriately opening and closing an adjustment valve (not shown) of the measured quantity dispensing tap 30 in the separating basin 16 and another adjustment valve (not shown) of the reactant filling/refilling port 54 in the return column cooler 20 with reference to an indicated value of the level gauge 32.

In the separating basin 16, the reaction gas products NF₂Cl and NFCl₂ are drawn through four of the gas outlets 36, and part of the reaction gas products is fed as a target product as has been desired to the next stage while the residue is supplied to the gaseous material sparging port 60.

Temperature in the column reactor 12, which is influential upon generation of the fluorinated gas compounds, may be controlled to a desired level such as to 20±5 degrees Celsius by appropriately opening and closing an adjustment valve (not shown) in the coolant supply port 40 with reference to measurements of the thermometers 34, 50 of the separating basin 16 and the return column cooler 20, respectively, so as to regulate supply of the coolant.

### DETAILED DESCRIPTION OF PRACTICES

### Experiment 1

A reaction device was prepared in a configuration like that of the fluorinated gas compound generating apparatus 10 in Fig. 1. The liquid stock L (NH₄F-2.0HF) was added through the reactant filling/refilling port 54 to fill the column reactor and flow into the separating basin 16 till the liquid level came up to the middle of the basin. A quantity of the liquid stock L to fill this much was about 35 litters. The liquid stock L was timely refilled by an amount of the liquid reacted and reduced through the reactant filling/refilling port 54.

The virgin gas material ClF₃ started and continued reaction while being sparged at flow rate of 4 SLM through the gaseous material sparging port 60 to draw the reaction gas products NF₂Cl and NFCl₂ derived from the reaction through the gas outlets 36 although part of the reaction gas products returned trough pipes (made of SUS304) not shown in the drawings to the gaseous material sparging port 60. The flow rate of the reaction gas product sparged through the port 60 ranged from 40 to 60 SLM.

During the reaction, the returning liquids, cooled while it flew through the return column cooler, regulated the liquid in the refilled separating basin 16 to temperature ranging 19 to 25 degrees Celsius.

No trouble was observed during and 240 hours after the apparatus was actuated by supplying it with the virgin gaseous material and the reaction/recycled gas products through the gaseous material sparging port 60.

### Experiment 2

The reaction device was prepared in a configuration like that of the fluorinated gas compound generating apparatus 10 in Fig 1. The liquid stock L (NH₄F-2.0HF) was added through the reactant filling/refilling port 54 to fill the column reactor and flow into the separating basin 16 till the liquid level came up to the middle of the basin. A quantity of the liquid stock L to fill this much was about 35 litters. The liquid stock L was timely refilled by an amount of the liquid reacted and reduced through the reactant filling/refilling port 54.

The virgin gas material ClF₃ started and continued reaction while being sparged at flow rate of 0.4 SLM through the gaseous material sparging port 60 to draw the reaction gas products NF₂Cl and NFCl₂ derived from the reaction through the gas outlets 36 so that the whole quantity of the reaction gas products thus collected underwent additional reaction described as 'further fluorinating the reaction gas products', which produced 'second-cycle gas product NF₃', which in turn partially returned trough pipes (made of SUS304) not shown in the drawings to the gaseous material sparging port 60. The flow rate of the reaction gas product sparged through the port 60 ranged from 40 to 60 SLM. In this flow of the gaseous material, 5 to 6 SLM is of ClF₃ gas remaining unreacted. With the reactant gaseous material containing the unreacted and recycled ClF₃ gas portion, approximately 4 SLM alone might get really reactive in the succeeding reaction cycle.

During the reaction, the returning liquids, cooled while it flew through the return column cooler, regulated the liquid in the refilled separating basin 16 to temperature ranging 19 to 25 degrees Celsius.

No trouble was observed during and 240 hours after the apparatus was actuated by supplying it with the virgin gaseous material and the reaction/recycled gas products through the gaseous material sparging port 60. Also, in the course of the reaction, the reaction gas product immediately after being retrieved through the gas outlets 36 had its composition analyzed. The analysis results are provided in Table 1 as below. In contrast with Comparison 1 detailed later, a smaller percentage of N₂ in the gas product was observed.

**Table 1**

| N₂ | NF₃ | Other | N₂ /NF₃ |
|---|---|---|---|
| 6% | 62% | 32% | 0.10 |

### Comparison 1

The reaction device was prepared in a configuration like that of the fluorinated gas compound generating apparatus 10 in Fig 1. The liquid stock L (NH₄F-2.0HF) was added through the reactant filling/refilling port 54 to fill the column reactor and flow into the separating basin 16 till the liquid level came up to the middle of the basin. A quantity of the liquid stock L to fill this much was about 35 litters. The liquid stock L was timely refilled by an amount of the liquid reacted and reduced through the reactant filling/refilling port 54.

The virgin gas material ClF₃ started and continued reaction while being sparged at flow rate of 4 SLM through the gaseous material sparging port 60 to draw the reaction gas products NF₂Cl and NFCl₂ derived from the reaction through the gas outlets 36 although part of the reaction gas products thus collected returned trough pipes (made of SUS304) not shown in the drawings to the gaseous material sparging port 60. The flow rate of the reaction gas product sparged through the port 60 ranged from 40 to 60 SLM.

During the reaction, the returning liquids, cooled while it flew through the return column cooler, regulated the liquid in the refilled separating basin 16 to temperature ranging 19 to 25 degrees Celsius.

The residue of the reaction gas products NF₂Cl and NFCl₂ immediately after being retrieved through the gas outlets 36 and not returned for recycle to the gaseous material sparging port 60 underwent a treatment of reacting with F₂ in an additional reaction chamber to generate NF₃. It was observed that yield of the reacted per the reactant was 100%. The reaction gas derived through the gas outlets 36 had its composition analyzed. The analysis results are provided in Table 2 as below.

In contrast with Experiment 2, as will be recognized, a greater percentage of N₂ in the reaction gas retrieved through the gas outlets 36 was observed. 100% yield of NF₃ composed from NF₂CL, NFCl₂, and N₂ explains a cause of this degraded effect than in Experiment 2.

**Table 1**

| N₂ | NF₃ | Other | N₂/NF₃ |
|---|---|---|---|
| 3% | 22% | 75% | 0.14 |

### BRIEF DESCRIPION OF THE DRAWINGS

[Figure 1] Fig. 1 is a side view of a first embodiment of an apparatus of generating fluorinated gas compounds (10).
[Figure 2] Fig. 2 is a plan view of the exemplary fluorinated gas compound generating apparatus (10).
[Figure 3] Fig. 3 is a horizontal sectional view showing a return column cooler (20, 124).
[Figure 4] Fig. 4 is a sectional view of an enlarged part of a gaseous material sparging port in Figs. 1 and 6.
[Figure 5] Fig. 5 is a vertical sectional view of a reactant gaseous material supply nozzle.

### DESCRIPTION OF REFERENCE NUMERALS

- L: Liquid Stock
- 10: Fluorinated Gas Compound Generating Apparatus
- 12: Column Reactor
- 14: Bottom of Basin
- 16: Separating Basin
- 20: Return Column Cooler
- 30: Measured Quantity Dispensing Tap
- 32: Level Gauge Orifice
- 34: Thermometer Orifice
- 36: Gas Outlets
- 40: Coolant Supply Port
- 42: Coolant Drawing Port
- 44: Cooling Housing
- 46: Reaction Channels
- 50: Thermometer
- 54: Reactant Filling/Refilling Port
- 60: Gaseous Material Sparging Port
- 62: Reactant Gas Nozzle
- 66: Nozzle Apertures

## Claims

1. An apparatus (10) of generating fluorinated gas compounds by means of reacting liquid stock with gaseous material comprising
- a vertical cyclindrical column reactor (12),
- a separating basin (16) having its bottom (14) conductively coupled to the top of the column reactor (12) and
- a return column cooler (20) conductively coupled to the bottom of the separating basin (16) and expending downward therefrom;
wherein the separating basin (16) is hollow and columnar in shape, its inner wall is covered with thin film of polytetrafluorethylene, further it is circular in horizontal cross-section and has a measured quantity dispensing tap (30) in its lower side; at the top of the separating basin (16) a level gauge orifice is centered and a thermometer orifice (34) and four gas outlets (36) are all concentrically arranged in the middle of radius segments of the circular top; and wherein the return column cooler (20) has a coolant supply port (40) at its lower side and a coolant drawing port (42) at it upper side as well as a plurality of reaction channels (46) in parallel one another within a hollow cylindrical cooling housing (44); further the lower portion of the return column cooler (20) is buckled in right-angled L shape to lie horizontal and then further bent up at right angle so as to lead to the bottom of the column reactor (12); the horizontal extension of the return column cooler (20) between both the right-angled bends is provided with a thermometer (50) residing horizontally; an upright end from the right-angled bend ahead from the horizontal extension in the return column cooler (20) at the bottom a reactant filling/refilling port (54) is conducted vertically upward; further in its part in the vicinity of the column reactor (12) a gaseous material sparging port (60) is provided having a reactant gas nozzle (62) with a plurality of nozzle apertures (66) that are beveled downward in the vicinity of the distal end, wherein the reactant gas nozzle (62) is attached so that the nozzle apertures (66) are almost centered in a horizontal dimension of a lumen of the return column cooler (20).

2. A method of generating fluorinated gas compounds by means of reacting liquid stock with gaseous material using an apparatus according to claim 1 as circulating system,
wherein
- a fluid including NH₄F-nHF as virgin liquid stock L circulates through the column reactor (12), the separating basin (16), and the return column cooler (20) successively,
- the return column cooler (20) is refilled throught the reactant filling port (54) with the reaction/recycled liquids that are drawn through the measured quantity dispensing tap (30) and regulated in quantity as much as that of the virgin stock L,
- a reactant gaseous material ClF₃ and the reaction gas products NF₂Cl, NFCl₂ and NF₃ are sparged through the sparging port (60) into a liquid mixture containing the reaction/recycled liquids drawn through the measured quantity dispensing tap (30), the virgin stock L and the reacted liquid stock L in the return column, wherein
- the reactant gaseous material ClF₃ is a virgin gas newly applied to undergo the reaction for the first time,
- the reaction gas products NF₂Cl and NFCl₂ are drawn from the gas outlets (36) at the top of the separting basin, and
- NF₃ is derived from the second or later cycle fluorinating reaction where the reaction gas products NF₂Cl and NFCl₂ obtained through the gas outlet (36) are further fluorinated.

3. The method of generating fluorinated gas compounds according to claim 2, wherein the liquid mixture undergoes temperature adjustment in the column reactor (12) to a desired level of 20±5 °C.

## Patentansprüche

1. Vorrichtung (10) zur Herstellung fluorierter gasförmiger Verbindungen durch Umsetzen von flüssigem Ausgangsmaterial mit gasförmigem Material, umfassend:
- einen vertikalen zylindrischen Säulenreaktor (12),
- einen Trennbehälter (16), dessen Boden (14) leitend mit dem oberen Teil des Säulenreaktors (12) gekoppelt ist, und
- einen Rücklaufsäulenkühler (20), der leitend mit dem Boden des Trennbehälters (16) gekoppelt ist und sich von dort nach unten erstreckt;
wobei der Trennbehälter (16) hohl und säulenförmig ist, seine Innenwandung mit einer dünnen Schicht aus Polytetrafluorethylen überzogen ist, er weiterhin im horizontalen Querschnitt kreisförmig ist und in seiner unteren Seitenfläche einen Abflusshahn zum Abziehen einer abgemessenen Menge (30) aufweist; an der Oberseite des Trennbehälters (16) eine Öffnung für einen Füllstandsmesser zentriert ist und eine Öffnung für ein Thermometer (34) und vier Gasauslässe (36) alle in der Mitte von Radiussegmenten der kreisförmigen Oberseite konzentrisch angeordnet;
und wobei der Rücklaufsäulenkühler (20) einen Kühlmittelzuführungsanschluss (40) an seiner unteren Seitenfläche und einen Kühlmittelabführungsanschluss (42) an seiner oberen Seitenfläche sowie eine Mehrzahl von zueinander parallelen Reaktionskanälen (46) in einem hohlen zylindrischen Kühlgehäuse (44) aufweist; weiterhin der untere Teil des Rücklaufsäulenkühlers (20) in eine rechtwinklige L-Form gekrümmt ist, um horizontal zu verlaufen, und dann weiter im rechten Winkel nach oben gebogen ist, um zum Boden des Säulenreaktors (12) zu führen; die horizontale Erstreckung des Rücklaufsäulenkühlers (20) zwischen den beiden rechtwinkligen Bögen mit einem horizontal angeordneten Thermometer (50) versehen ist; ein aufrecht stehendes Stück von dem rechtwinkligen Bogen voraus der horizontalen Erstreckung in den Rücklaufsäulenkühler (20) am Boden ein Anschluss zum Einfüllen/Nachfüllen von Reaktanten (54) senkrecht nach oben geführt ist; weiterhin in seinem Teil in der Nähe des Säulenreaktors (12) ein Anschluss zum Einblasen von gasförmigem Material (60) bereitgestellt ist, der in der Nähe des distalen Endes eine Reaktionsgasdüse (62) mit einer Mehrzahl von Düsenöffnungen (66), die nach unten abgeschrägt sind, aufweist, wobei die Reaktionsgasdüse (62) so angebracht ist, dass die Düsenöffnungen (66) in einer horizontalen Ausdehnung eines Hohlraums des Rücklaufsäulenkühlers (20) annähernd zentriert sind.

2. Verfahren zur Herstellung fluorierter gasförmiger Verbindungen durch Umsetzen von flüssigem Ausgangsmaterial mit gasförmigem Material unter Verwendung einer Vorrichtung nach Anspruch 1 als Umlaufsystem,
wobei
- ein Fluid, das NH₄F-nHF umfasst, als frisches flüssiges Ausgangsmaterial L nacheinander durch den Säulenreaktor (12), den Trennbehälter (16) und den Rücklaufsäulenkühler (20) zirkuliert,
- der Rücklaufsäulenkühler (20) über den Anschluss zum Einfüllen von Reaktanten (54) mit den Reaktionsflüssigkeiten/zurückgeführten Flüssigkeiten nachgefüllt wird, die über den Abflusshahn zum Abziehen einer abgemessenen Menge (30) abgezogen und auf eine Menge, die so groß wie die des frischen Ausgangsmaterials L ist, eingestellt werden,
- ein gasförmiges Reaktionsmaterial ClF₃ und die gasförmigen Reaktionsprodukte NF₂Cl, NFCl₂ und NF₃ über den Anschluss zum Einblasen (60) in ein Flüssigkeitsgemisch eingeblasen werden, das die Reaktionsflüssigkeiten/zurückgeführten Flüssigkeiten, die über den Abflusshahn zum Abziehen einer abgemessenen Menge (30) abgezogen werden, das frische Ausgangsmaterial L und das umgesetzte flüssige Ausgangsmaterial L in der Rücklaufsäule enthält, wobei
- das gasförmige Reaktionsmaterial ClF₃ ein frisches Gas ist, das neu eingesetzt wird, um die Reaktion zum ersten Mal zu durchlaufen,
- die gasförmigen Reaktionsprodukte NF₂Cl und NFCl₂ aus den Gasauslässen (36) an der Oberseite des Trennbehälters abgezogen werden, und
- NF₃ aus der Fluorierungsreaktion des zweiten oder eines späteren Zyklus abgeleitet ist, wobei die über den Gasauslass (36) erhaltenen gasförmigen Reaktionsprodukte NF₂Cl und NFCl₂ weiter fluoriert werden.

3. Verfahren zur Herstellung fluorierter gasförmiger Verbindungen nach Anspruch 2, wobei das Flüssigkeitsgemisch in dem Säulenreaktor (12) eine Temperatureinstellung auf einen gewünschten Wert von 20 ± 5 °C erfährt.

## Revendications

1. Appareil (10) de génération de composés gazeux fluorés à moyen de la réaction de la substance liquide avec le matériau gazeux, comprenant
- un réacteur à colonne cylindrique verticale (12),
- un bassin de séparation (16) ayant son fond (14) couplé par conduction à la partie supérieure du réacteur à colonne (12), et
- un refroidisseur de colonne de retour (20) couplé par conduction au fond du bassin de séparation (16) et subissant une expansion vers le bas à partir de ce dernier ;
dans lequel le bassin de séparation (16) est creux et de forme colonnaire, sa paroi interne est recouverte avec un film fin de polytétrafluoréthylène, en outre il est circulaire en section transversale horizontale et a un robinet de distribution de quantité mesurée (30) dans son côté inférieur ; au niveau de la partie supérieure du bassin de séparation (16), un orifice d'indicateur de niveau est centré et un orifice de thermomètre (34) et quatre sorties de gaz (36) sont tous agencés de manière concentrique au milieu des segments de rayon de la partie supérieure circulaire ; et dans lequel le refroidisseur de colonne de retour (20) a un orifice d'alimentation en réfrigérant (40) au niveau de son côté inférieur et un orifice d'aspiration de réfrigérant (42) au niveau de son côté supérieur ainsi qu'une pluralité de canaux de réaction (46) parallèles entre eux à l'intérieur d'un boîtier de refroidissement cylindrique creux (44) ; en outre la partie inférieure du refroidisseur de colonne de retour (20) est déformée en forme de L en angle droit pour être horizontale et ensuite se courber vers le haut en angle droit afin d'arriver au fond du réacteur à colonne (12) ; l'extension horizontale du refroidisseur de colonne de retour (20) entre les deux coudes en angle droit est prévue avec un thermomètre (50) horizontal ; une extrémité droite à partir du coude en angle droit devant l'extension horizontale dans le refroidisseur de colonne de retour (20) au fond d'un orifice de remplissage/réapprovisionnement en réactif (54) est amenée verticalement vers le haut ; en outre dans sa partie à proximité du réacteur à colonne (12), on prévoit un orifice de pulvérisation de matériau gazeux (60) ayant une buse de gaz réactif (62) avec une pluralité d'ouvertures de buse (66) qui sont biseautées vers le bas à proximité de l'extrémité distale, dans lequel la buse de gaz réactif (62) est fixée de sorte que les ouvertures de buse (66) sont presque centrées dans une dimension horizontale d'une lumière du refroidisseur de colonne de retour (20).

2. Procédé pour générer des composés gazeux fluorés au moyen de la réaction de la substance liquide avec un matériau gazeux à l'aide d'un appareil selon la revendication 1 en tant que système de circulation,
dans lequel
- un fluide comprenant NH₄F-nHF en tant que substance liquide vierge L circule dans le réacteur à colonne (12), le bassin de séparation (16) et le refroidisseur de colonne de retour (20) successivement,
- le refroidisseur de colonne de retour (20) est réapprovisionné par l'orifice de remplissage de réactif (54) avec des liquides de réaction/recyclés qui sont aspirés par le robinet de distribution de quantité mesurée (30) et régulés en quantité tout autant que celle de la substance vierge L,
- un matériau gazeux réactif ClF₃ et les produits de gaz de réaction NF₂Cl, NFCl₂ et NF₃ sont pulvérisés par l'orifice de pulvérisation (60) dans un mélange de liquide contenant les liquides de réaction/recyclés aspirés par le robinet de distribution de quantité mesurée (30), la substance vierge L et la substance liquide qui a réagi L dans la colonne de retour, dans lequel
- le matériau gazeux réactif ClF₃ est un gaz vierge nouvellement appliqué pour subir la réaction pour la première fois,
- les produits de gaz de réaction NF₂Cl et NFCl₂ sont aspirés des sorties de gaz (36) au niveau de la partie supérieure du bassin de séparation, et
- NF₃ est dérivé de la seconde ou dernière réaction de fluoration de cycle dans laquelle les produits de gaz de réaction NF₂Cl et NFCl₂ obtenus par la sortie de gaz (36) sont encore fluorés.

3. Procédé pour générer des composés gazeux fluorés selon la revendication 2, dans lequel le mélange de liquide subit un ajustement de température dans le réacteur à colonne (12) à un niveau souhaité de 20 ± 5°C.
